# EUROPEAN PATENT APPLICATION

(11) **EP 4 800 278 A1**
(43) Date of publication of application: **02.09.2026**
(21) Application number: 26160865.7
(22) Date of filing: 26.02.2026
(51) Int. Cl.: F16L 23/04, F16L 27/06, F16L 23/22

(54) **CLAMPED QUICK CONNECT MISALIGNMENT-COMPENSATING UNION FOR FLUID TRANSFER**

(30) Priority: 27.02.2025 US 202563763995 P
(71) Applicant: Dixon Valve & Coupling Company, LLC, Chestertown, MD 21620 (US)
(72) Inventor: HINTON, Austen, Mukwonago, Wisconsin, 53149 (US)
(74) Representative: Robba, Pierpaolo

(57) **Abstract**

A union (30) of mating ends of tubes or pipes is provided. The union (30) includes a female fitting (32) forming a free end of a tube or pipe and having an inner facing radiused surface and an integral outward extending ferrule (54), a male fitting (38) having an outer facing radiused surface for sliding engagement with the inner facing radiused surface of the female fitting (32), and a seal (34) located between the inner facing radiused surface of the female fitting (32) and the outer facing radiused surface of the male fitting (38). The union (30) further includes a compression collar (36) having an integral ferrule (56) for being compressed against the ferrule (54) of the female fitting (32) and an inner facing radiused surface for engagement with the male fitting (38) for capturing the male fitting in an engaged condition with the female fitting.

## Description

### Technical Field of the Invention

The present invention relates to unions that connect two mating end sections of tubing, piping, or the like in end-to-end relation thereby providing a fluidic coupling.

### Background

A type of connection typically used in many industries is referred to as a so-called "tri-clamp" connection which is used to join two mating sections of tubing, piping, or hose. For example, see U.S. Patent No. 11,703,171 B2 issued to Hinton. Other types of unions may also be utilized, such as ball joint unions and I-line unions.

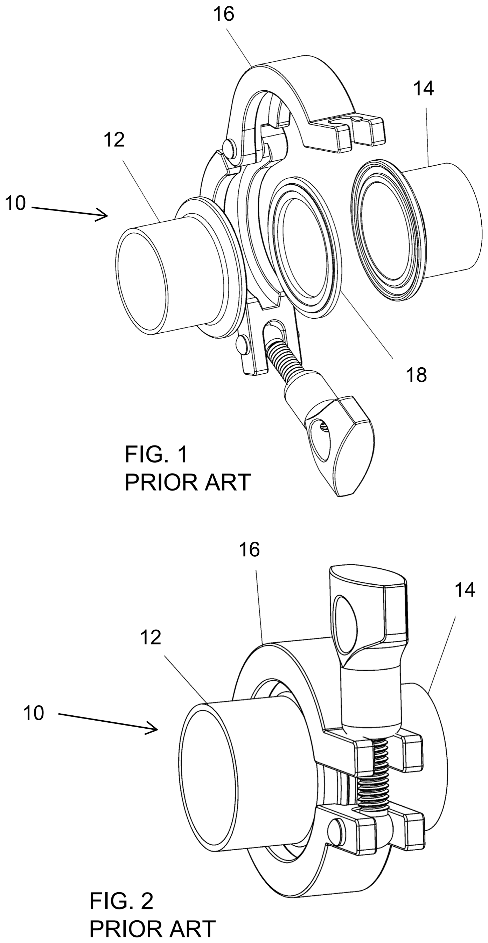

For purposes of example, Figs. 1-4 depict a tri-clamp union 10. This union does not function well when mating tubing sections, 12 and 14, are misaligned (i.e., misaligned relative to an intended longitudinal axis of the process tubing). When tubing sections are misaligned, the angular variation between the mating faces of the union makes installing a clamp 16 increasingly difficult and results in the clamp 16 being used as a mechanical device to straighten the misaligned tubing sections, 12 and 14, rather than as a means purely to compress a union seal 18. Additionally, the flat face gasket section 18 easily loses compression as any load is applied to the union 10 creating over compression on one side of the union 10 and under compression on the opposing side. This creates a potential for a leak to develop.

In the data center cooling equipment industry, the tubing and equipment being connected are constructed of stainless steel or similar alloy. This union can be easily and instantly connected and disconnected using a hinged or double-bolted clamp conventionally being used in the data cooling equipment industry. However, as stated above, conventional unions that use this style of hinged or bolted clamp for joining tubing sections, can become exceedingly difficult to assemble due to misalignment. The union can then become prone to failures resulting from the misalignment. The most critical failure being fluid leaks. Leaks in a data center can have catastrophic effects and therefore the reliability of the union in such an application is paramount. The tolerances achievable for the equipment and tubing sections that these unions are incorporated on are often not sufficient to allow for consistent, aligned, and easy to assemble unions.

### Summary of the Invention

According to an embodiment, a union of mating ends of tubes or pipes is provided. The union includes a female fitting forming a free end of a tube or pipe and having an inner facing radiused surface and an integral outward extending ferrule, a male fitting having an outer facing radiused surface for sliding engagement with the inner facing radiused surface of the female fitting, and a seal located between the inner facing radiused surface of the female fitting and the outer facing radiused surface of the male fitting. The union further including a compression collar having an integral ferrule for being compressed against the ferrule of the female fitting and an inner facing radiused surface for engagement with the male fitting for capturing the male fitting in an engaged condition with the female fitting.

### Brief Description of the Drawings

FIG. 1 is an exploded perspective view of a prior art tri-clamp union.
FIG. 2 is a perspective view of the assembled union of FIG. 1.
FIG. 3 is a cross-sectional view of union of FIG. 2.
FIG. 4 is a magnified cross-sectional view of a circled portion of FIG. 3.
FIG. 5 is an exploded perspective view of a union according to an embodiment.
FIG. 6 is a cross-sectional view of the assembled union of FIG. 5.
FIG. 7 is a perspective view of the union of FIG. 5 with an external clamp applied according to an embodiment.
FIG. 8 is a cross-sectional view of the union and clamp of FIG. 7.
FIG. 9 is a cross-sectional view of the assembled union of FIG. 5.
FIG. 10 is a magnified cross-sectional view of a part of the union of FIG. 9.
FIG. 11 is a cross-sectional view of the union of FIG. 5 accommodating a misaligned configuration.
FIG. 12 is an exploded perspective view of a union according to an embodiment.

### Detailed Description

Embodiments disclosed herein overcome the difficulty of installing clamps on misaligned mating sections and thus, the potential for seal failures at misaligned joints can be greatly reduced.

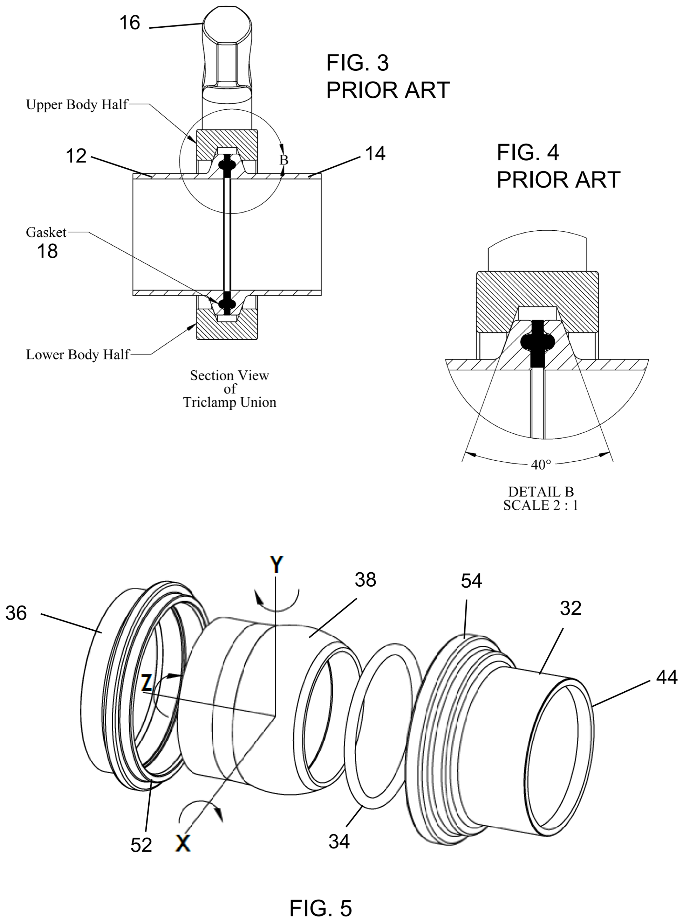

According to the embodiment shown in FIGs. 5-8, a union 30 includes a female fitting 32, a seal 34, a compression collar 36, and a male fitting 38. The union 30 can also include an external component, such as a hinged or bolted clamp 40, that is used to secure and lock the union 30 in an assembled, leak-free coupling condition.

In use, an end 42 of the female fitting 32 is welded or otherwise connected to process tubing (not shown) and an opposite end 44 retains the elastomeric or rubber sealing member 34 within a groove 46 machined or formed in the inner diameter of the fitting 32. The opposite end 44 may also include an integral outwardly-extending ferrule 54 discussed in greater detail below.

An end 48 of the male fitting 38 is welded or otherwise connected to process tubing (not shown) and an opposite end 50 is capable of being received within the female fitting. In the assembled condition, the male fitting is urged into engagement with the female fitting by the compression collar 36 such that the rubber or elastomeric sealing member 34 is compressed and creates a leak free union.

According to some embodiments, the compression collar 36 may be constructed of a dissimilar non-galling metal or may be made of a surface treated metal (such as a metal treated with a KOLSTERISING^{™} surface hardening technology) to prevent galling from occurring between the compression collar 36 and male fitting 38.

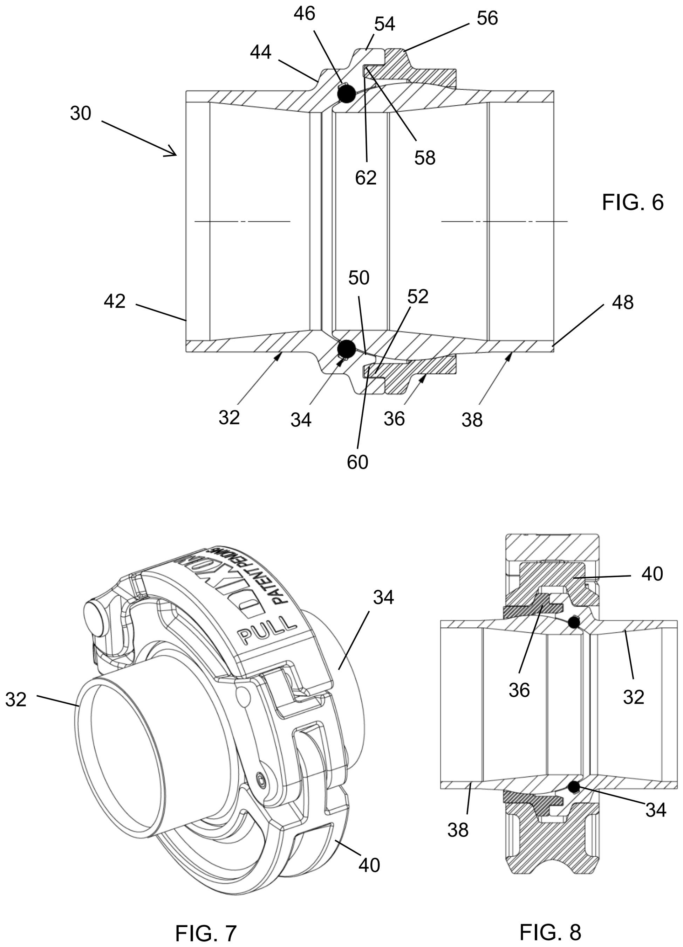

The force to compress the compression collar 36 against the female fitting 32 is provided by the external hinged or bolted clamp 40 that is installed over the outer diameter of the female fitting 32 and the outer diameter of the compression collar 36 as shown in Fig. 8. For this purpose, the female fitting 32 has an outwardly extending ferrule 54 that mates against a ferrule 56 of the compression collar. As the clamp 40 is tightened or closed, the ferrule 56 of the compression collar 36 and the ferrule 54 of the female fitting 32 make metal-to-metal contact and become mechanically locked together by means of a circumferential stepped shoulder 52 provided by the ferrule 56 of the compression collar 36 and a circumferential groove 58 on the ferrule 54 of the female fitting 32. The stepped shoulder 52 and groove 58 engage in a tongue-and-groove manner.

The stepped shoulder 52 on the compression collar 36 has an angled face 60 on an inner diameter of the stepped shoulder 52 that mates with an adjoining angled face 62 on the inner diameter of the groove 58 in the female fitting 32. The mating angled faces, 60 and 62, self-center the male fitting 38 on the female fitting 32 as the captive clamping collar 36 compresses the assembly by means of the external hinged or bolted clamp 40.

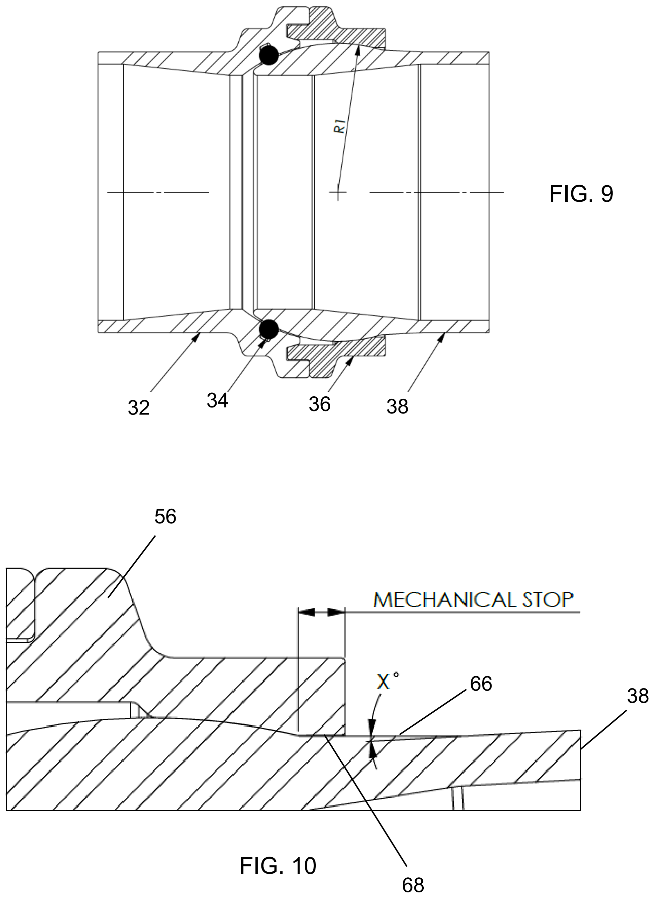

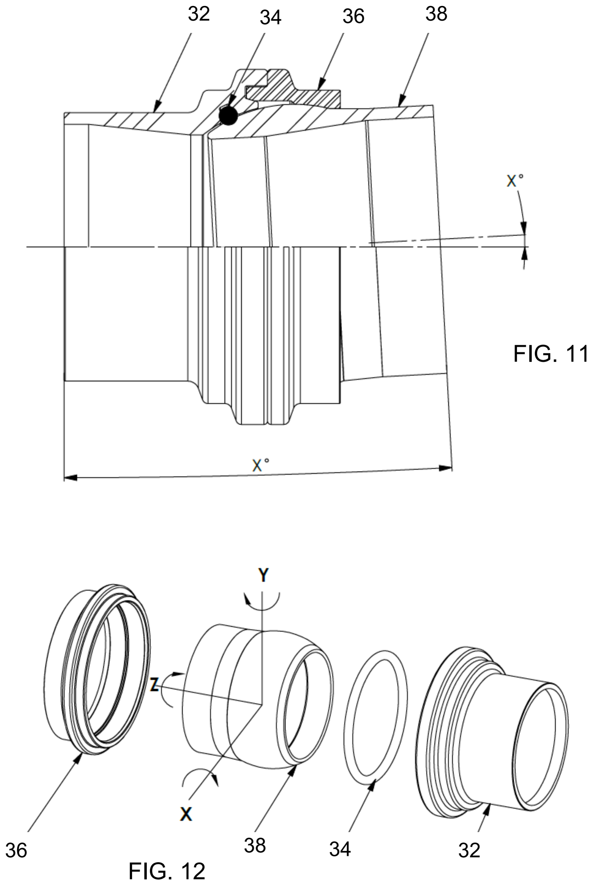

The outside radius R1 (see Fig. 9) of the male fitting 38 mates smoothly against the inside radius (substantially same as R1) of the compression collar 36 allowing the male fitting 38 to rotate about X, Y, and Z axes as shown in Fig. 12. Any three or any combination of these three components (female fitting 32, compression collar 36, and male fitting 38) may be constructed of a non-galling material or be surface treated to prevent galling between metal-to-metal contact points.

Accordingly, movement of the male fitting 38 within the compression collar 36 functions as a ball and socket joint permitting an angular misalignment between the female fitting 32 and the male fitting 38 of up to a predetermined angle of X° as shown in Fig. 11(i.e., angular misalignment of the longitudinal axis of the female fitting 32 relative to the longitudinal axis of the male fitting 38 in any direction). For this purpose, a shoulder 66 of the male fitting 38 is tapered at X° to create a mechanical stop and limit the maximum misalignment of the union to the desired amount and eliminate an overtravel condition that could cause the sealing member to lose contact with the outside radius R1 of the male fitting 38. For instance, see Figs. 9 and 10. The mechanical stop occurs when the tapered surface 66 of male fitting 38 and a corresponding tapered surface 68 of the compression collar 36 make contact (as shown in FIG. 10 and 11). As the angular misalignment varies based on manufacturing fit up tolerances of the mating equipment or tubing sections during installation, or misalignment caused by movement in the system from thermal expansion or contraction, the amount of compression on the sealing member 34 remains constant unlike that of a flat face seal (such as seal 18 in Figs. 1-4). The floating and captive compression collar 36 allows for the female fitting 32 and the compression collar 36 to clamp together, to produce varying X°, as if the female fitting 32 and male fitting 38 were in a condition of being completely on centerline. This eliminates the need for external force to be applied to the union 30 for proper alignment before clamping. It additionally ensures consistent compression on the sealing member 34, even in cases of misalignment.

By way of example, and not by way of limitation, the pipe sections of the fittings may have an outer diameter with a range of about 0.5 inches to about 6 inches. Of course, the outer diameter of the pipe sections of the fittings may be greater or less than the range of size as stated above. Preferably, the male and female fittings and compression collar are made of metal and the seal is an O-ring made of an elastomeric or rubber material. The collar 36 may be constructed of a high strength 17-4 martensitic stainless steel that can be heat treated. This limits deformation of the collar 36 at elevated pressures reducing the potential for loss of seal compression and leaks. It can also help reduce galling at high contact pressures between the floating collar and the mating fitting components.

The foregoing description and specific embodiments are merely illustrative of the principles thereof, and various modifications and additions may be made to the apparatus by those skilled in the art, without departing from the spirit and scope of this invention.

## Claims

1. A union (30) of mating ends of tubes or pipes, comprising:
a female fitting (32) forming a free end of a tube or pipe, said female fitting having an inner facing radiused surface and an integral outward extending ferrule (54);
a male fitting (38) having an outer facing radiused surface for sliding engagement with said inner facing radiused surface of said female fitting (32);
a seal (34) located between said inner facing radiused surface of said female fitting (32) and said outer facing radiused surface of said male fitting (38);
a compression collar (36) having an integral ferrule (56) for being compressed against said ferrule (54) of said female fitting (32) and an inner facing radiused surface for engagement with said male fitting (38) and for capturing said male fitting in engagement with said female fitting.

2. The union (30) according to claim 1, wherein said ferrule (56) of said compression collar (36) has a stepped shoulder (52) and said ferrule (54) of said female fitting (32) has a groove (58) for receiving said stepped shoulder.

3. The union (30) according to claim 2, wherein said stepped shoulder (52) of said compression collar (36) has an angled face (60) on an inner diameter of said stepped shoulder (52) and wherein an adjoining surface of said female fitting (32) defining said groove (58) has an angled face (62) that mates against said angled face of said compression collar.

4. The union (30) according to claim 2, wherein said compression collar (36) having an end opposite said stepped shoulder that has an inner facing tapered surface (68), and wherein said male fitting (38) has an outer facing tapered surface (66).

5. The union (30) according to claim 4, wherein the inner facing tapered surface (68) of said compression collar and said outer tapered facing surface (66) of said male fitting abut and provide a mechanical stop when a longitudinal axis of said male fitting (38) extends at a predetermined angle relative to the longitudinal axis of said female fitting (32), wherein said predetermined angle is greater or less than 0°.

6. The union (30) according to claim 1, wherein the female fitting (32), male fitting (38) and compression collar (36) are made of metal.

7. The union (30) according to claim 6, wherein at least one of the female fitting (32), male fitting (38) and compression collar (36) has a non-galling surface treated surface.

8. The union (30) according to claim 6, wherein the compression collar (36) is made of a different metal than the male fitting (38).

9. The union (30) according to claim 8, wherein the compression collar (36) is made of a high strength 17-4 martensitic stainless steel that has been subject to heat treatment.

10. The union (30) according to claim 1, wherein at least one of the female fitting (32), male fitting (38) and compression collar (36) is made of a non-galling material.

11. The union (30) according to claim 1, further comprising a clamp (40) that compresses said ferrule (54) of said female fitting (32) against said ferrule (56) of said compression collar (36).

12. The union (30) according to claim 1, wherein a circumferential groove (46) extends within said inner facing radiused surface of said female fitting (32), and wherein said seal (34) is retained with said circumferential groove (46).

13. The union (30) according to claim 1, wherein said seal (34) is an O-ring made of an elastomeric or rubber material.
